# EUROPEAN PATENT SPECIFICATION

(11) **EP 4 521 275 B1**
(45) Date of publication and mention of the grant of the patent: **29.04.2026**
(21) Application number: 23851609.0
(22) Date of filing: 28.07.2023
(51) Int. Cl.: G06F 21/57

(54) **MAINBOARD FOR SECURITY VALIDATION, SECURITY VALIDATION METHOD AND APPARATUS, AND MEDIUM**
HAUPTPLATINE ZUR SICHERHEITSVALIDIERUNG, SICHERHEITSVALIDIERUNGSVERFAHREN UND -VORRICHTUNG UND MEDIUM
CARTE MÈRE POUR VALIDATION DE SÉCURITÉ, PROCÉDÉ ET APPAREIL DE VALIDATION DE SÉCURITÉ, ET SUPPORT

(30) Priority: 09.08.2022 CN 202210952770
(43) Date of publication of application: 12.03.2025
(73) Proprietor: Alipay (Hangzhou) Information Technology Co., Ltd., Hangzhou, Zhejiang 310000 (CN)
(72) Inventor: AN, Wei, Hangzhou, Zhejiang 310000 (CN)
(74) Representative: Fish & Richardson P.C.
(86) International application number: PCT/CN2023/109845
(87) International publication number: WO 2024/032388

(56) References cited:
- CN-A- 102 270 167
- CN-A- 105 959 249
- CN-A- 113 420 297
- CN-A- 115 391 769
- US-A1- 2011 060 899
- US-A1- 2011 302 459
- US-A1- 2013 132 730

## Description

### TECHNICAL FIELD

This specification relates to the field of computer technologies, and in particular, to mainboards for security verification, security verification methods and apparatuses, and media.

### BACKGROUND

At present, with the rapid development of information security technologies and people's increasing concern about their private data, as well as the help of trusted computing in solving security risks of information security and other aspects, trusted computing technology has become an important application and research branch in the field of information security.

US 2011/0302459 A1 describes a method that tests hard disk ports located on a motherboard of a computing device. Each of the hard disk ports connects to a respective serial port of a test fixture. The test fixture includes a group of serial ports, a multiplexer and a storage device. Each of the hard disk ports is selected to be tested during the process of hard disk ports test. A data transmission path is formed by building a connection between the storage device and a channel of the multiplexer corresponding to the hard disk port. Data are written to the storage device and read from the storage device through the data transmission path. The hard disk port is working normal if the written data are identical to the read data. The hard disk port is not working normally if the written data are not identical to the read data.

### SUMMARY

The invention is defined by the appended claims. This specification provides mainboards for security verification, security verification methods and apparatuses, and media, so as to partially alleviate the previous problems existing in a related technology.

This specification uses the following technical solutions: This specification provides a mainboard for security verification. The mainboard for security verification is deployed in an electronic device, a device to be verified is disposed inside and/or a device to be verified is externally connected to the electronic device, the mainboard for security verification includes a verification unit and a channel management unit, the verification unit is connected to the channel management unit, and the channel management unit is connected to each device to be verified, where the verification unit is configured to: after the electronic device is powered on, send a verification instruction for the device to be verified to the channel management unit; and receive configuration information, of the device to be verified, returned by the channel management unit, verify the configuration information according to verification information, of each device to be verified, stored by the verification unit, and control the electronic device to start after it is determined that the device to be verified is verified; and the channel management unit is configured to: determine the device to be verified according to the received verification instruction, obtain the configuration information of the device to be verified, and return the configuration information to the verification unit.

This specification provides a security verification method, used by a verification unit to perform security verification, where a mainboard for security verification is deployed in an electronic device, a device to be verified is disposed inside and/or a device to be verified is externally connected to the electronic device, the mainboard for security verification includes the verification unit and a channel management unit, the verification unit is connected to the channel management unit, and the channel management unit is connected to each device to be verified; and the method includes: after the electronic device is powered on, sending a verification instruction for the device to be verified to the channel management unit; receiving configuration information, of the device to be verified, returned by the channel management unit; verifying the configuration information according to stored verification information of each device to be verified; and after it is determined that the device to be verified is verified, controlling the electronic device to start.

This specification provides a security verification method, used by a channel management unit to perform security verification, where a mainboard for security verification is deployed in an electronic device, a device to be verified is disposed inside and/or a device to be verified is externally connected to the electronic device, the mainboard for security verification includes a verification unit and the channel management unit, the verification unit is connected to the channel management unit, and the channel management unit is connected to each device to be verified; and the method includes: after the electronic device is powered on, receiving a verification instruction sent by the verification unit; determining the device to be verified according to the verification instruction; and obtaining configuration information of the device to be verified, and returning the configuration information to the verification unit.

This specification provides a security verification apparatus, used by a verification unit to perform security verification, where a mainboard for security verification is deployed in an electronic device, a device to be verified is disposed inside and/or a device to be verified is externally connected to the electronic device, the mainboard for security verification includes the verification unit and a channel management unit, the verification unit is connected to the channel management unit, and the channel management unit is connected to each device to be verified; and the apparatus includes: a sending module, configured to: after the electronic device is powered on, send a verification instruction for the device to be verified to the channel management unit; a receiving module, configured to receive configuration information, of the device to be verified, returned by the channel management unit: a verification module, configured to verify the configuration information according to stored verification information of each device to be verified; and a starting module, configured to: after it is determined that the device to be verified is verified, control the electronic device to start.

This specification provides a security verification apparatus, used by a channel management unit to perform security verification, where a mainboard for security verification is deployed in an electronic device, a device to be verified is disposed inside and/or a device to be verified is externally connected to the electronic device, the mainboard for security verification includes a verification unit and the channel management unit, the verification unit is connected to the channel management unit, and the channel management unit is connected to each device to be verified; and the apparatus includes: a receiving module, configured to: after the electronic device is powered on, receive a verification instruction sent by the verification unit; a determining module, configured to determine the device to be verified according to the verification instruction; and a forwarding module, configured to: obtain configuration information of the device to be verified, and return the configuration information to the verification unit.

This specification provides a computer-readable storage medium, where the storage medium stores a computer program, and the computer program is executed by a processor to implement the above-mentioned security verification method.

The previous at least one technical solution used in this specification can achieve the following beneficial effects: This specification discloses a mainboard for security verification, a security verification method and apparatus, and a medium. A verification unit connected to a channel management unit and a channel management unit connected to each device to be verified are disposed. After an electronic device is powered on, the verification unit is controlled to send a verification instruction for the device to be verified to the channel management unit, configuration information of the device to be verified is obtained according to the received verification instruction by using the channel management unit, and the configuration information is returned to the verification unit. Then the verification unit verifies the received configuration information according to stored verification information. After verification succeeds, the electronic device is controlled to start.

The configuration information of the device to be verified is sent by using the channel management unit to the verification unit for verification, so as to implement security verification on a device to be verified disposed inside the electronic device and/or a device to be verified externally connected to the electronic device in a start process of the electronic device, thereby ensuring information security.

### BRIEF DESCRIPTION OF DRAWINGS

The accompanying drawings described here are used to provide a further understanding of this specification, and constitute a part of this specification. Example embodiments of this specification and descriptions of the embodiments are used to explain this specification, and do not constitute an inappropriate limitation on this specification. In the accompanying drawings:
FIG. 1 is a schematic structural diagram illustrating a mainboard for security verification, according to this specification;
FIG. 2A is a schematic structural diagram illustrating a mainboard for security verification, according to this specification;
FIG. 2B is a schematic structural diagram illustrating a mainboard for security verification, according to this specification;
FIG. 3 is a schematic flowchart illustrating a security verification method, according to this specification;
FIG. 4 is a schematic flowchart illustrating a security verification method, according to this specification;
FIG. 5 is a schematic structural diagram illustrating a security verification apparatus, according to this specification; and
FIG. 6 is a schematic structural diagram illustrating a security verification apparatus, according to this specification.

### DESCRIPTION OF EMBODIMENTS

To make the objectives, technical solutions, and advantages of this specification clearer, the following clearly and comprehensively describes the technical solutions of this specification with reference to specific embodiments of this specification and corresponding accompanying drawings. It is clear that the described embodiments are merely some but not all of embodiments of this specification.

At present, with development of computer technologies, peripherals, such as a network adapter, that can interact with a device in a network and/or can process data gradually increase, and deploying chips for data processing in the peripherals has become relatively universal. In this case, it is becoming more common for attackers to use peripherals connected to electronic devices to attack the electronic devices to steal information. Therefore, when an electronic device is powered on and started, security verification on a peripheral connected to the electronic device has become one of problems that need to be solved in the information security field.

The technical solutions provided in the embodiments of this specification are described in detail below with reference to the accompanying drawings. Embodiments of this specification will perform security verification on a peripheral of an electronic device based on a mainboard for security verification.

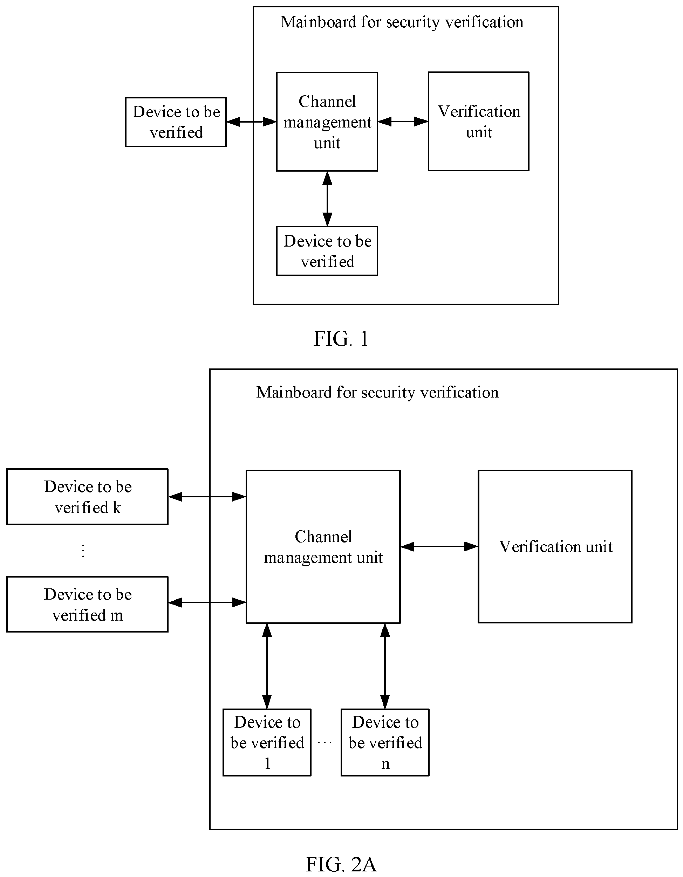

FIG. 1 is a schematic structural diagram illustrating a mainboard for security verification, according to this specification. The mainboard for security verification includes a verification unit and a channel management unit.

In terms of hardware, in one or more embodiments provided in this specification, the verification unit and the channel management unit in the mainboard for security verification can be specifically a chip, a logic control circuit, etc. The verification unit is a TPM chip that can receive configuration information and verify the configuration information. After an electronic device is powered on, the verification unit, that is, the TPM chip, is started. The verification unit obtains configuration information of each device to be verified from the channel management unit, and verifies each piece of configuration information.

The channel management unit can be a programmable digital logic chip, such as a field-programmable gate array (FPGA) chip or a complex programmable logic device (CPLD) chip. The channel management unit can be connected to the verification unit for data transmission, and the channel management unit can be further connected to the device to be verified for data transmission.

The device to be verified contains a target memory for storing host configuration information of the electronic device. The host configuration information is the most basic configuration information of the electronic device that contains a BIOS and/or a BMC. The device to be verified can be externally connected to the electronic device, for example, a printer or a network adapter, or can be disposed inside the electronic device, for example, a coprocessor such as a graphic processing unit (GPU) or a fan configured to dissipate heat.

Certainly, the previous mainboard for security verification can be deployed on a separate circuit board, or can be deployed on the same circuit board as another electronic component of the electronic device. The another electronic component can be a CPU, a GPU, a memory bank, etc. The device to be verified can be disposed on the same circuit board as the verification unit and the channel management unit, or can be disposed on a different circuit board from that of the verification unit and the channel management unit, and is connected to each other by using a busbar, an I/O bus, etc., to implement data transmission between the channel management unit and the device to be verified. Specifically, how to dispose the mainboard for security verification, a position of the mainboard for security verification in the electronic device, how to specifically connect the mainboard for security verification to the device to be verified in the electronic device, etc. can be set as needed, which is not limited in this specification.

In terms of software, in one or more embodiments provided in this specification, the verification unit can be a program that runs on a TPM chip and performs security verification on received data. The channel management unit can be a program that runs on a compilable chip and receives data and parses or forwards the data. The mainboard for security verification implements functions of each unit by running code of each unit. In addition, code of different units in this specification is mutually independent, and each unit can perform communication or data transmission with another unit or device through a predetermined data interface. Through mutually independent units, code of each unit can be iteratively updated and tested separately.

In one or more embodiments provided in this specification, the basis for implementing security verification on multiple devices to be verified by the mainboard for security verification is as follows: The verification unit is not directly connected to the device to be verified to obtain configuration information of the device to be verified, but is connected to the channel management unit, the channel management unit is connected to each device to be verified to obtain the configuration information, and forwards the configuration information to the verification unit, and the verification unit verifies the configuration information. The channel management unit reserves multiple channels for connecting to the device to be verified. Therefore, security verification can be implemented for multiple devices to be verified when the electronic device is powered on, so as to ensure information security.

Based on this, the verification unit can obtain the configuration information of each device to be verified by using the channel management unit.

Specifically, after the electronic device is powered on, the verification unit can be awakened.

The verification unit can send a verification instruction for the device to be verified to the channel management unit after being awakened, that is, after being powered on.

The verification instruction can be sent for all devices to be verified connected to the channel management unit, or can be sent for at least a part of devices to be verified connected to the channel management unit.

Therefore, after receiving the verification instruction, the channel management unit can determine the device to be verified according to the verification instruction, obtain configuration information of the device to be verified from the device to be verified, and return the configuration information to the verification unit.

The verification unit can receive configuration information, of the at least a part of the devices to be verified, sent by the channel management unit. Each device to be verified corresponding to the received configuration information is the same as each device to be verified targeted by the previous verification instruction.

After receiving the configuration information, the verification unit can verify the received configuration information according to verification information, of each device to be verified, prestored in the verification unit.

Obtaining the host configuration information of the electronic device is used as an example. Assume that the host configuration information is a BIOS program, the verification unit can send a verification instruction for the target memory to the channel management unit. The channel management unit can determine, according to the verification instruction, the target memory for storing the BIOS program, obtain the BIOS program from the target memory, and forward the BIOS program to the verification unit.

After receiving the BIOS program, the verification unit can run the BIOS program, and determine, based on whether a running result matches a root of trust for measurement stored in the verification unit, whether verification succeeds.

Certainly, the configuration information received by the channel management unit can be the running result of the BIOS program in the target memory, the channel management unit can send the running result to the verification unit, and the verification unit verifies the running result of the BIOS program. The type and form of specific configuration information and how to measure the configuration information are relatively mature technologies currently and are not limited in this specification.

After the configuration information returned for the verification instruction is verified by the verification unit, the verification unit can control the electronic device to start.

Further, the verification unit stores a device identifier of each device to be verified, and the verification unit can send, based on the stored device identifier, a verification instruction carrying the device identifier to the channel management unit.

After receiving the verification instruction, the channel management unit can determine, according to the device identifier carried in the verification instruction, the device to be verified corresponding to the device identifier, and send an obtaining instruction to the device to be verified.

After receiving the obtaining instruction, the device to be verified can send configuration information thereof to the channel management unit. The device to be verified can alternatively be a non-volatile memory storing the configuration information of the device to be verified. Specifically, the type of the device to be verified, how to store the configuration information, and how to obtain the configuration information from the device to be verified can be set as needed, which is not limited in this specification.

For configuration information of each device to be verified, after receiving the configuration information, the channel management unit can forward the configuration information to the verification unit according to the device identifier of the device to be verified.

The verification unit can receive the configuration information, determine, according to the device identifier corresponding to the configuration information, verification information corresponding to the device identifier from verification information separately corresponding to each piece of prestored configuration information, and then verify the device identifier based on the determined verification information.

The verification information can be a string, can be a key, or can be a predetermined rule. Specifically, the type and form of the verification information and how to verify the configuration information based on the verification information can be set as needed, which is not limited in this specification.

Further, if the electronic device itself is not trustworthy, it would be pointless to verify security of the other device to be verified, that is, it would be necessary to measure security of the other device to be verified only if the electronic device is trustworthy.

Based on this, the verification unit can first verify the host configuration information of the electronic device, and then after verification succeeds, verify configuration information of the other device to be verified.

Specifically, after the electronic device is powered on, the verification unit can send a first verification instruction for the target memory to the channel management unit.

The channel management unit can determine the target memory according to a device identifier in the first verification unit, obtain the host configuration information of the electronic device from the target memory, and forward the host configuration information to the verification unit.

After receiving the host configuration information, the verification unit can verify the host configuration information according to stored verification information corresponding to the electronic device.

If verification fails, the verification unit can consider that the electronic device itself is not trustworthy. Therefore, in this scenario, to ensure information security and avoid further expansion of a risk, the verification unit can send warning information used to prompt that a fault exists in the host, and control the electronic device to power off and shut down.

If verification succeeds, the verification unit can consider that the electronic device is in a trusted execution environment, and security verification continues to be performed on the other device to be verified. Therefore, the verification unit can send a second verification instruction to the channel management unit according to a device identifier of the other device to be verified different from the target memory.

The channel management unit can determine, according to a device identifier in the second verification instruction, a device to be verified corresponding to the device identifier. Therefore, the channel management unit can obtain peripheral configuration information of the device to be verified, and after obtaining the peripheral information, returns the peripheral configuration information to the verification unit according to the device identifier in the second verification instruction.

The verification unit can determine, according to the device identifier carried in the peripheral configuration information, verification information corresponding to the device identifier from prestored verification information separately corresponding to each device to be verified, and verify the peripheral configuration information based on the determined verification information.

If verification fails, the verification unit can consider that the device to be verified is not trustworthy. Similarly, in this scenario, to ensure information security and avoid further expansion of a risk, the verification unit can send warning information used to prompt that a fault exists in the device to be verified, and control the electronic device to power off and shut down.

If verification succeeds, the verification unit can consider that the device to be verified is trustworthy. In this scenario, the verification unit can separately perform security verification on each of other devices to be verified, and after verification succeeds according to peripheral configuration information of each device to be verified, the electronic device can be controlled to start.

FIG. 1 describes an example in which the mainboard for security verification performs security verification on only one device to be verified disposed inside the electronic device and one device to be verified externally connected to the mainboard for security verification. Actually, there can be multiple devices to be verified disposed inside the electronic device and multiple devices to be verified externally connected to the electronic device, as shown in FIG. 2A.

FIG. 2A is a schematic structural diagram illustrating a mainboard for security verification, according to this specification. In the figure, n devices to be verified are disposed inside the electronic device, and m-k+1 devices to be verified are externally connected to the electronic device. Therefore, the channel management unit can be connected to a device to be verified 1 to a device to be verified n disposed inside the electronic device. Similarly, the channel management unit can be connected to a device to be verified k to a device to be verified m disposed outside the electronic device. Therefore, the verification unit can verify, by using the channel management unit, each device to be verified connected to the channel management unit.

In addition, in this specification, there may be a device to be verified that is connected to the channel management unit through a physical interface. In an example in which the device to be verified is a network adapter and the physical interface is an Open Core Protocol (OCP) interface that satisfies the OCP standard, at least an interface unit and a peripheral memory are disposed in the network adapter, the interface unit is configured to connect to the channel management unit through the physical interface to perform data transmission, and the peripheral memory is configured to store peripheral configuration information of the device to be verified.

Therefore, when obtaining the peripheral configuration information of the device to be verified, the channel management unit needs to obtain the peripheral configuration information by using the interface unit of the device to be verified.

Further, for each interface unit, a data type transmitted in the interface unit is predefined. If an attacker obtains sensitive information from the electronic device or injects untrusted data by using the interface unit during or after starting of the electronic device, it is also impossible to ensure information security.

Based on this, before the peripheral configuration information of the device to be verified is verified, security verification needs to be further performed on the interface unit of the device to be verified.

Specifically, after the host configuration information is verified, the verification unit can send a third verification instruction for the interface unit of the device to be verified to the channel management unit.

After receiving the third verification instruction, the channel management unit can determine the interface unit in the device to be verified according to a device identifier in the third verification instruction, obtain interface configuration information of the interface unit from the interface unit, and forward the interface configuration information to the verification unit.

A memory for storing the interface configuration information corresponding to the interface unit can be disposed in the interface unit, so the interface unit can obtain the interface configuration information stored in the memory, and forward the interface configuration information to the verification unit. The memory for storing the interface configuration information of the interface unit can be connected to the interface unit, and the interface configuration information can be an execution standard corresponding to the interface, that is, a data type transmitted by each pin in the interface unit, a time for transmitting data by each pin, etc.

The verification unit can verify the interface configuration information according to verification information, for the interface unit, stored in the verification unit, and after the interface configuration information is verified, send, to the channel management unit, a second verification instruction for a peripheral memory of the device to be verified.

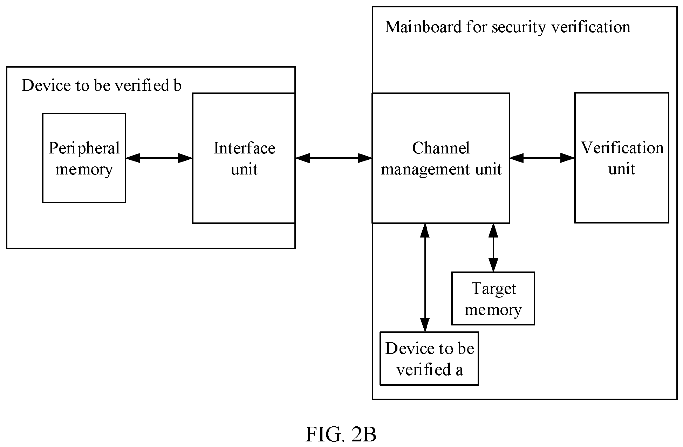

The channel management unit can obtain peripheral configuration information from the peripheral memory of the device to be verified according to the second verification instruction by using the interface unit, and return the peripheral configuration information to the verification unit, so the verification unit verifies the peripheral configuration information, as shown in FIG. 2B.

FIG. 2B is a schematic structural diagram illustrating a mainboard for security verification, according to this specification. In the figure, security measurement, that is, verification, needs to be performed on a device to be verified a disposed inside the electronic device, a device to be verified b externally connected to the electronic device, and a target memory for storing the host configuration information of the electronic device. The channel management unit and the interface unit are connected by using a predetermined physical interface. The device to be verified disposed inside the electronic device, the target memory, and the channel management unit are deployed in the mainboard for security verification, and are connected by using a serial bus.

After the electronic device is powered on, the verification unit can send a first verification instruction to the channel management unit. The channel management unit can obtain the host configuration information of the electronic device from the target memory according to the first verification instruction, and send the host configuration information to the verification unit for verification.

After the host configuration information is verified, if the device to be verified b connected by using the predetermined physical interface needs to be verified, the verification unit needs to send a third verification instruction for an interface unit of the device to be verified b. The channel management unit can obtain interface configuration information of the interface unit from the interface unit according to the third verification instruction, and send the interface configuration information to the verification unit for verification. After verification succeeds, the verification unit can send a second verification instruction to the channel management unit for a peripheral memory of the device to be verified b. The channel management unit can obtain the peripheral configuration information of the device to be verified from the peripheral memory according to the second verification instruction by using the interface unit, and return the peripheral configuration information to the verification unit for verification.

After the host configuration information is verified, if the device to be verified a connected by using the predetermined physical interface needs to be verified, the verification unit can directly send a second verification instruction for the device to be verified a to the channel management unit. The channel management unit obtains peripheral configuration information of the device to be verified a according to the second verification instruction, sends the peripheral configuration information to the verification unit, and the verification unit verifies the peripheral configuration information.

Certainly, the peripheral memory in FIG. 2B can alternatively be considered as a device to be verified that is connected to the channel management unit by using a predetermined interface unit. That is, the interface unit is not inside the device to be verified, but the device to be verified is connected to the channel management unit by using a peripheral interface unit. Specifically, how the device to be verified defines and connects to the interface unit can be set as needed, which is not limited in this specification.

In addition, the channel management unit in any chip after the chip is produced, data transmission standards corresponding to its pins have been predefined. For each pin, a data transmission standard of the pin contains at least a time period for transmitting a signal by the pin. In a case in which the channel management unit uses a programmable logic chip, if the programmable logic chip still needs to perform data processing after the electronic device is started, the channel management unit needs to transmit configuration information without affecting an original transmission signal of each pin.

Specifically, for each pin, the channel management unit can determine an idle time period of the pin according to a data transmission standard of the pin. Therefore, the channel management unit can transmit configuration information in the idle time period. The idle time period is a predefined time period for data transmission by the pin.

Further, in this specification, each pin corresponding to the channel management unit can be multiplexed in a time division multiplexing manner to transmit configuration data. For example, the channel management unit is a chip that satisfies the Open Compute Project (OCP) standard, as shown in Table 1:

**Table 1**

| Pins | Original signals | Multiplexed signals | I/O |
|---|---|---|---|
| OCP_A1 | DATA_N | SPI_CS | I |
| OCP_A2 | CLK | SPI1_MISO | 0 |
| OCP_A3 | SLOT_ID1 | CLK | I |
| ... | ... | ... | ... |

Table 1 is a schematic table of signal multiplexing of the channel management unit provided in this specification. OCP_A1, OCP_A2, OCP_A3, and ... are different pins of the channel management unit, and the original signal is a signal type transmitted when data transmission is performed based on a data transmission standard predefined for each pin, where DATA_IN is an input signal, CLK is a clock signal, and SLOT_ID1 is an interface sequence number of the previous physical interface. One channel management device unit can be connected to multiple devices to be verified by using multiple physical interfaces. The multiplexed signal is a type of a signal transmitted by the channel management unit in an idle time period of the pin. SPI_CS is a chip select signal, and is used to control the channel management unit to gate a device to be verified. I/O indicates whether the pin is specifically used to receive data or send data.

Certainly, for each pin, a standard or definition manner that an original signal and a multiplexed signal of the pin conform and a specific defined type can be set as needed, which is not limited in this specification.

Further, in this specification, a channel between the channel management unit and the device to be verified generates a random signal after the electronic device is powered on, to avoid interference of the random signal to the configuration information transmitted by the channel management unit, the channel management unit can further gate, after determining a device to be verified, a channel thereof connected to the device to be verified, and obtain configuration information of the device to be verified through the channel.

Certainly, after determining a device to be verified, the channel management unit can further gate a channel thereof connected to the device to be verified, and supply power to the device to be verified, so as to wake the device to be verified, and obtain configuration information of the device to be verified through the channel after the device to be verified wakes up. As such, impact of the random signal is avoided, and resources are saved.

In addition, currently, after the host configuration information is verified, the verification unit verifies an operating system deployed in the electronic device, and starts the operating system after verification succeeds. After the host configuration information is verified, the verification unit in this specification further needs to verify security of the other device to be verified.

Therefore, after the host configuration information is verified, the verification unit can send a suspend instruction to a control unit of the electronic device, disconnect a connection to a non-volatile storage unit storing the host configuration information, so as to delay starting of the electronic device, and send verification information to the channel management unit according to a device identifier of the device to be verified, so as to determine, according to a verification result, that both the electronic device and the device to be verified are in a trusted environment.

Therefore, after peripheral configuration information of each device to be verified is verified by the verification unit, the verification unit can determine that the electronic device and the device to be verified are in a trusted environment, and the verification unit can control the electronic device to continue to start. Then, the verification unit can send an execution instruction to the control unit of the electronic device, and connect the non-volatile storage unit storing the host configuration information, so as to continue a startup procedure of the electronic device.

Further, the electronic device can contain and/or connect to multiple devices to be verified, and priorities of the devices to be verified are not completely the same. For example, a network adapter can be preferentially verified because the network adapter can process data in the electronic device, and verification on a printer can be suspended because the printer can only perform an operation such as printing data. In addition, if verification on the network adapter fails, the verification unit can consider that a network environment of the electronic device is not trustworthy, and control the electronic device to power off and shut down. If verification on the printer fails, the verification unit can consider that the printer is not trustworthy, continue to start the electronic device, and send warning information used to prompt that the printer is abnormal.

Therefore, after the host configuration information is verified, according to predetermined priorities of devices to be verified, sequentially for each device to be verified, the verification unit can send a second verification instruction for the device to be verified to the channel management unit, and receive configuration information returned for the second verification instruction.

When it is determined, according to the received configuration information, that the device to be verified is in a trusted environment, the verification unit can send a verification instruction to the channel management unit according to a device identifier of the next device to be verified until verification on each device to be verified is completed.

Further, when the verification unit verifies peripheral configuration information of the device to be verified, a case in which verification fails may occur because the peripheral configuration information is affected by a status of the device to be verified.

Therefore, for each device to be verified, the verification unit can send a reset instruction to the channel management unit according to a device identifier of the device to be verified.

The channel management unit can forward the reset instruction to the device to be verified.

The device to be verified restores an initial state according to the reset instruction, after restoring the initial state, the device to be verified sends peripheral configuration information thereof to the channel management unit.

The channel management unit can send the peripheral configuration information to the verification unit according to the reset instruction, and the verification unit performs security verification on the device to be verified.

The reset instruction can alternatively be sent by the verification unit according to the device identifier of the device to be verified when verification by the verification unit fails according to the peripheral configuration information. A specific sending occasion of the reset instruction can be set as needed, which is not limited in this specification.

In the mainboard for security verification as shown in FIG. 1, a verification unit connected to a channel management unit and a channel management unit connected to each device to be verified are disposed. After an electronic device is powered on, the verification unit is controlled to send a verification instruction for the device to be verified to the channel management unit, the device to be verified is determined according to the received verification instruction by using the channel management unit, configuration information of the device to be verified is obtained, and the configuration information is returned to the verification unit. Then the verification unit verifies the received configuration information according to stored verification information. After verification succeeds, the electronic device is controlled to start. In the mainboard for security verification, the configuration information of the device to be verified is sent by using the channel management unit to the verification unit for verification, so as to implement security verification on a device to be verified disposed inside the electronic device and/or a device to be verified externally connected to the electronic device in a start process of the electronic device, thereby ensuring information security.

In addition, to ensure resource utilization, the verification unit and the channel management unit can further transmit data in a data transmission channel in a form of time division multiplexing and/or frequency division multiplexing.

Specifically, the verification unit and the channel management unit transmit first data on a first data transmission channel to implement data transmission.

Therefore, the verification unit can determine a first transmission channel used for data transmission with the channel management unit, and determine a time-frequency resource corresponding to the first transmission channel.

Then, the verification unit can determine first data for data transmission with the channel management unit, and divide the time-frequency resource of the first transmission channel according to the first data.

Finally, the verification unit can transmit each piece of first data according to the divided time-frequency resource.

When the time-frequency resource is divided according to the first data, the time-frequency resource can be divided according to a data amount included in the first data, or the time-frequency resource can be divided according to a data type included in the first data. Specifically, how to transmit data based on the form of time division multiplexing and/or frequency division multiplexing is a relatively mature technology currently. This is not limited in this specification.

Certainly, the channel management unit and each device to be verified further transmit data on a data transmission channel in the form of time division multiplexing and/or frequency division multiplexing.

Specifically, the channel management unit and each device to be verified transmit second data on a second data transmission channel, so as to implement data transmission.

Therefore, for each device to be verified, the device management unit can determine a second transmission channel used for data transmission with the device to be verified, and determine a time-frequency resource corresponding to the second transmission channel.

Then, the device management unit can determine second data for data transmission with the device to be verified, and divide the time-frequency resource of the second transmission channel according to the second data.

Finally, the verification unit can transmit each piece of second data according to the divided time-frequency resource.

Similarly, when the time-frequency resource is divided according to the second data, the time-frequency resource can be divided according to a data amount included in the second data, or the time-frequency resource can be divided according to a data type included in the second data. Specifically, how to transmit data based on the form of time division multiplexing and/or frequency division multiplexing is a relatively mature technology currently. This is not limited in this specification.

The previous description uses a time division multiplexing/frequency division multiplexing manner to perform data transmission, so as to transmit the host configuration information and the peripheral configuration information of each device to be verified to the verification unit in less time, and complete verification on the host itself and the device to be verified in the host in a relatively short time. This ensures service execution efficiency, and avoids cases in which user satisfaction decreases and resource utilization decreases due to too long time required for starting of the electronic device.

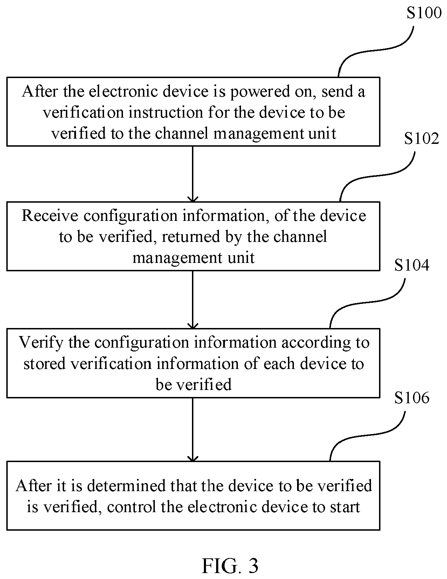

Based on the same idea, this specification further provides a schematic flowchart of a security verification method, specifically as shown in FIG. 3.

FIG. 3 is a schematic flowchart illustrating a security verification method, according to this specification. The security verification method is used by a verification unit to perform security verification, where a mainboard for security verification is deployed in an electronic device, a device to be verified is disposed inside and/or a device to be verified is externally connected to the electronic device, the mainboard for security verification includes the verification unit and a channel management unit, the verification unit is connected to the channel management unit, and the channel management unit is connected to each device to be verified.

S100. After the electronic device is powered on, send a verification instruction for the device to be verified to the channel management unit.

S102. Receive configuration information, of the device to be verified, returned by the channel management unit.

S104. Verify the configuration information according to stored verification information of each device to be verified.

S106. After it is determined that the device to be verified is verified, control the electronic device to start.

In one or more embodiments of this specification, the security verification method can be performed by the verification unit in the mainboard for security verification. For a specific process, refer to the previous description of the verification unit in the mainboard used for security verification. Details are not described in this specification.

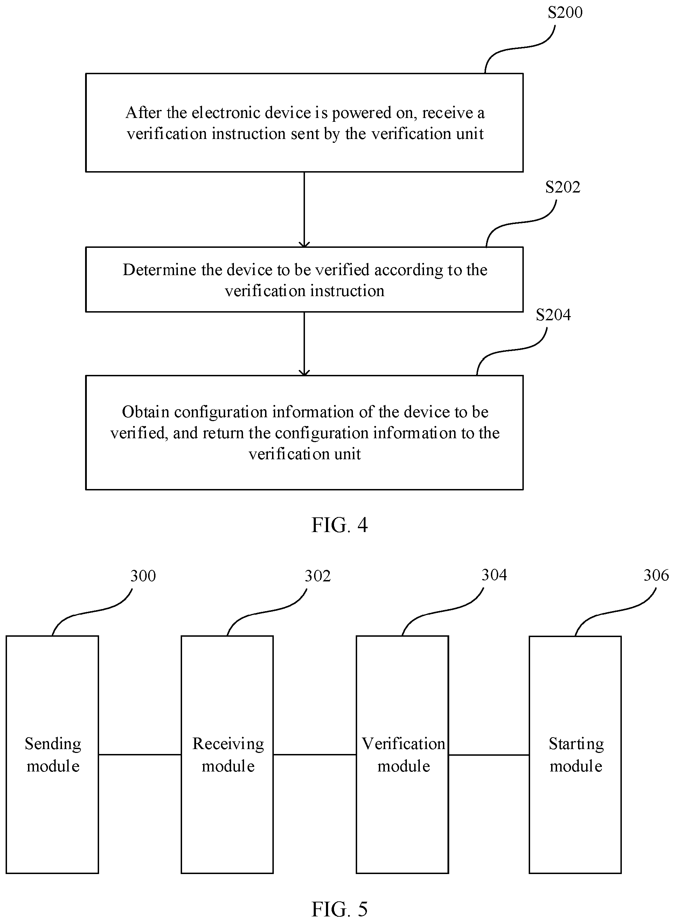

Based on the same idea, this specification further provides a schematic flowchart of a security verification method, specifically as shown in FIG. 4.

FIG. 4 is a schematic flowchart illustrating a security verification method, according to this specification. The method is used by a channel management unit to perform security verification, where a mainboard for security verification is deployed in an electronic device, a device to be verified is disposed inside and/or a device to be verified is externally connected to the electronic device, the mainboard for security verification includes the verification unit and a channel management unit, the verification unit is connected to the channel management unit, and the channel management unit is connected to each device to be verified.

S200. After the electronic device is powered on, receive a verification instruction sent by the verification unit.

S202. Determine the device to be verified according to the verification instruction.

S204. Obtain configuration information of the device to be verified, and return the configuration information to the verification unit.

In one or more embodiments of this specification, the security verification method can be performed by the channel management unit in the mainboard for security verification. For a specific process, refer to the previous description of the channel management unit in the mainboard used for security verification. Details are not described in this specification.

Based on the same idea, this specification further provides a structural diagram of a security verification apparatus, as shown in FIG. 5.

FIG. 5 is a schematic structural diagram illustrating a security verification apparatus, according to this specification. The apparatus is used by a verification unit to perform security verification, where a mainboard for security verification is deployed in an electronic device, a device to be verified is disposed inside and/or a device to be verified is externally connected to the electronic device, the mainboard for security verification includes the verification unit and a channel management unit, the verification unit is connected to the channel management unit, and the channel management unit is connected to each device to be verified. The apparatus includes the following modules:
a sending module 300, configured to: after the electronic device is powered on, send a verification instruction for the device to be verified to the channel management unit;
a receiving module 302, configured to receive configuration information, of the device to be verified, returned by the channel management unit;
a verification module 304, configured to verify the configuration information according to stored verification information of each device to be verified;
and a starting module 306, configured to: after it is determined that the device to be verified is verified, control the electronic device to start.

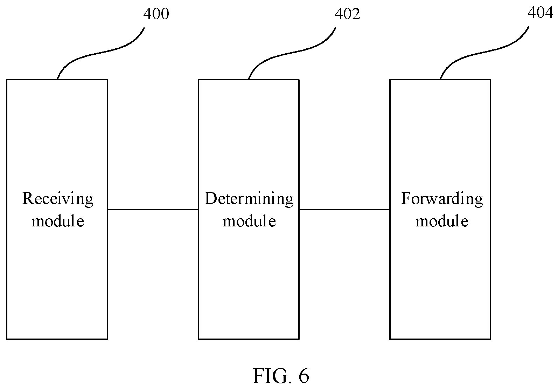

Based on the same idea, this specification further provides a structural diagram of a security verification apparatus, as shown in FIG. 6.

FIG. 6 is a schematic structural diagram illustrating a security verification apparatus, according to this specification. The apparatus is used by a channel management unit to perform security verification, where a mainboard for security verification is deployed in an electronic device, a device to be verified is disposed inside and/or a device to be verified is externally connected to the electronic device, the mainboard for security verification includes the verification unit and a channel management unit, the verification unit is connected to the channel management unit, and the channel management unit is connected to each device to be verified. The apparatus includes the following modules:
a receiving module 400, configured to: after the electronic device is powered on, receive a verification instruction sent by the verification unit;
a determining module 402, configured to determine the device to be verified according to the verification instruction;
and a forwarding module 404, configured to: obtain configuration information of the device to be verified, and return the configuration information to the verification unit.

In the 1990s, whether improvement to a technology is hardware improvement (for example, improvement to a circuit structure like a diode, a transistor, or a switch) or software improvement (improvement to a method procedure) can be clearly identified. However, with development of technologies, improvement to many existing method procedures can be considered as direct improvement to hardware circuit structures. A designer usually programs an improved method procedure to a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the programmable logic device is determined by programming a component by a user. A designer autonomously performs programming to "integrate" a digital system onto a PLD, without requesting a chip manufacturer to design and manufacture a dedicated integrated circuit chip. In addition, at present, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). At present, the Very-High-Speed Integrated Circuit Hardware Description Language (VHDL) and Verilog are most commonly used. It should also be clear to a person skilled in the art that a hardware circuit for implementing a logical method procedure can be easily obtained by performing slight logic programming on the method procedure by using the previous several hardware description languages and programming the method procedure into an integrated circuit.

The controller can be implemented in any suitable manner. For example, the controller can be in a form of a microprocessor or a processor and a computer-readable medium storing computer-readable program code (for example, software or firmware) that can be executed by the (micro) processor, a logic gate, a switch, an application-specific integrated circuit (ASIC), a programmable logic controller, and an embedded microcontroller. Examples of the controller include but are not limited to the following microcontrollers: ARC 625D, Atmel AT91SAM, Microchip PIC18F26K20, and Silicone Labs C8051F320. A storage controller can further be implemented as a part of control logic of a storage. A person skilled in the art also knows that, in addition to implementing the controller by using only computer-readable program code, logic programming can be performed on a method step, so the controller implements a same function in a form of a logic gate, a switch, an application-specific integrated circuit, a programmable logic controller, an embedded microcontroller, etc. Therefore, the controller can be considered as a hardware component, and an apparatus included in the controller for implementing various functions can also be considered as a structure in the hardware component. Or the apparatus configured to implement various functions can even be considered as both a software module implementing the method and a structure in the hardware component.

The system, apparatus, module, or unit illustrated in the previous embodiments can be implemented by using a computer chip or an entity, or can be implemented by using a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatus is described by dividing functions into various units. Certainly, during implementation of this specification, functions of units can be implemented in the same or more software or hardware.

A person skilled in the art should understand that some embodiments of this specification can be provided as methods, systems, or computer program products. Therefore, this specification can use a form of hardware only embodiments, software only embodiments, or embodiments with a combination of software and hardware. In addition, a form of a computer program product that is implemented on one or more computer-usable storage media (including but not limited to a disk memory, a CD-ROM, an optical memory, etc.) that include computer-usable program code can be used in this specification.

This specification is described with reference to the flowcharts and/or block diagrams of the method, the device (system), and the computer program product based on the embodiments of this specification. It should be understood that computer program instructions can be used to implement each procedure and/or each block in the flowcharts and/or the block diagrams and a combination of a procedure and/or a block in the flowcharts and/or the block diagrams. These computer program instructions can be provided to a processor of a general-purpose computer, a dedicated computer, an embedded processor, or other programmable data processing device to produce a machine, such that instructions executed by a processor of a computer or other programmable data processing device produce an apparatus for implementing a function specified in one or more processes of the flowchart and/or one or more blocks of the block diagram.

These computer program instructions can be stored in a computer readable memory that can instruct the computer or the another programmable data processing device to work in a specific way, so the instructions stored in the computer readable memory generate an artifact that includes an instruction apparatus. The instruction apparatus implements a specific function in one or more processes in the flowcharts and/or in one or more blocks in the block diagrams.

These computer program instructions can be loaded onto the computer or another programmable data processing device, so a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, the computing device includes one or more processors (CPU), input/output interfaces, network interfaces, and memory.

The memory may include a form such as a non-permanent memory, a random access memory (RAM), or a non-volatile memory in a computer-readable medium, for example, a read-only memory (ROM) or a flash memory (flash RAM). The memory is an example of the computer-readable medium.

The computer-readable medium includes persistent, non-persistent, movable, and unmovable media that can store information by using any method or technology. The information can be a computer readable instruction, a data structure, a program module, or other data. Examples of the storage medium of the computer include but are not limited to a phase-change memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disk (DVD) or another optical storage, a magnetic cassette tape, a magnetic disk storage or another magnetic storage device, or any other non-transmission medium, which can be configured to store information accessible to a computing device. As specified in this specification, the computer-readable medium does not include transitory computer-readable media (transitory media), such as a modulated data signal and a carrier.

It should also be noted that the term "include" or any other variant thereof is intended to cover a non-exclusive inclusion, so a process, a method, a product, or a device that includes a list of elements not only includes those elements but also includes other elements that are not expressly listed, or further includes elements inherent to such a process, method, product, or device. In a case without more restrictions, for an element limited by the statement "include a...", a process, method, product, or device that includes the element can further include another same element.

A person skilled in the art should understand that some embodiments of this specification can be provided as methods, systems, or computer program products. Therefore, a form of hardware only embodiments, software only embodiments, or embodiments with a combination of software and hardware can be used in this specification. In addition, a form of a computer program product that is implemented on one or more computer-usable storage media (including but not limited to a disk memory, a CD-ROM, an optical memory, etc.) that include computer-usable program code can be used in this specification.

This specification can be described in a general context of a computer-executable instruction executed by a computer, for example, a program module. Typically, program modules include routines, programs, objects, components, data structures, etc. that perform specific tasks or implement specific abstract data types. This specification can also be practiced in a distributed computing environment in which tasks are performed by remote processing devices connected via a communication network. In the distributed computing environment, a program module can be located in local and remote computer storage media including a storage device.

Embodiments in this specification are all described in a progressive manner, for same or similar parts in embodiments, mutual reference can be made to these embodiments, and each embodiment focuses on a difference from other embodiments. Particularly, the system embodiments are basically similar to the method embodiments, and therefore are described briefly. For related parts, references can be made to some descriptions in the method embodiments.

The above-mentioned descriptions are merely some embodiments of this specification and are not intended to limit this specification. A person skilled in the art can make various changes and variations to this specification. The scope of the invention is defined by the independent claims.

## Claims

1. A mainboard, wherein the mainboard is deployed in an electronic device, a device to be verified is disposed inside and/or a device to be verified is externally connected to the electronic device, the mainboard comprises a verification unit and a channel management unit, the verification unit is connected to the channel management unit, and the channel management unit is connected to each device to be verified, wherein the verification unit is configured to store, for each device to be verified, a respective device identifier; wherein
the verification unit is configured to, after the electronic device is powered on,
send (S100) a verification instruction for the device to be verified to the channel management unit, wherein the verification instruction carries a device identifier of the device to be verified,
receive (S102) configuration information of the device to be verified, returned by the channel management unit, wherein the received configuration information includes a device identifier corresponding to the configuration information,
verify (S104) the configuration information according to verification information of each device to be verified, stored by the verification unit, wherein verifying the configuration information comprises determining, according to the device identifier corresponding to the configuration information, verification information corresponding to the device identifier from the verification information of each device to be verified, and
control (S106) the electronic device to start after it is determined that the device to be verified is verified; and
the channel management unit is configured to
receive (S200), from the verification unit, the verification instruction,
determine (S202), according to the device identifier carried in the received verification instruction, the device to be verified,
obtain (S204) the configuration information of the device to be verified, and
return, according to the device identifier of the device to be verified, the obtained configuration information to the verification unit.

2. The mainboard according to claim 1, wherein the device to be verified is disposed inside the electronic device and contains at least a target memory for storing host configuration information of the electronic device; and
the verification unit is configured to, after the electronic device is powered on, send, to the channel management unit, a first verification instruction carrying a device identifier of the target memory; and receive and verify host configuration information returned by the channel management unit, and send a second verification instruction to the channel management unit according to a device identifier of the other device to be verified different from the target memory after it is determined that the host configuration information is verified, until verification on each device to be verified is completed; and
the channel management unit is configured to determine the target memory according to the device identifier carried in the first verification instruction, obtain the host configuration information from the target memory, and return the host configuration information to the verification unit; and determine, according to a device identifier carried in the second verification instruction, a device to be verified corresponding to the device identifier, obtain peripheral configuration information from the device to be verified, and return the peripheral configuration information to the verification unit according to the second verification instruction.

3. The mainboard according to claim 2, wherein the device to be verified contains at least an interface unit and a peripheral memory; and the interface unit and the channel management unit are connected through a predetermined physical interface; and
the channel management unit is configured to obtain peripheral configuration information of the device to be verified from the peripheral memory by using the interface unit.

4. The mainboard according to claim 3, wherein the verification unit is configured to send a third verification instruction for the interface unit of the device to be verified to the channel management unit; and receive and verify interface configuration information returned by the channel management unit, and send a second verification instruction for the peripheral memory of the device to be verified to the channel management unit after it is determined, according to the interface configuration information, that verification succeeds; and
the channel management unit is configured to determine the interface unit according to the third verification instruction, obtain the interface configuration information of the interface unit, and return the interface configuration information to the verification unit; and obtain the peripheral configuration information from the peripheral memory according to the second verification instruction by using the interface unit, and return the peripheral configuration information to the verification unit.

5. The mainboard according to claim 1, wherein the channel management unit is a chip predefining a data transmission standard of each pin; and
the channel management unit is configured to, for at least a part of pins, determine an idle time period of the pin according to a data transmission standard of the pin, and transmit the configuration information in the idle time period, wherein the idle time period is a time period not predefined for data transmission by the pin.

6. The mainboard according to claim 2, wherein priorities of other devices to be verified than the target memory are not completely the same; and
the verification unit is configured to, after the host configuration information is verified, according to predetermined priorities of the other devices to be verified than the target memory, send a second verification instruction to the channel management unit sequentially for each device to be verified according to a device identifier of the device to be verified, until verification on each device to be verified is completed.

7. The mainboard according to claim 1, wherein the verification unit is configured to, when it is determined, according to the received configuration information, that verification fails, determine that the electronic device is unreliable, and control the electronic device to power off and shut down.

8. The mainboard according to claim 1, wherein a control unit is further deployed in the electronic device, and the control unit is connected to the channel management unit;
the verification unit is configured to, after the electronic device is powered on, send, to the channel management unit, a suspend instruction used to pause starting of the electronic device;
and send, to the channel management unit, a start instruction used to continue to start the electronic device after it is determined that the device to be verified is verified; and
the channel management unit is configured to connect to the control unit in the electronic device according to the received suspend instruction, and send the suspend instruction to the control unit, so as to pause starting of an operating system predeployed in the control unit; and send the received start instruction to the control unit, so as to start the operating system in the control unit.

9. The mainboard according to claim 1, wherein the verification unit is configured to send a reset instruction carrying a device identifier to the channel management unit; and
the channel management unit is configured to forward the reset instruction to a device to be verified corresponding to the device identifier according to the device identifier, so the device to be verified restores an initial state according to the reset instruction, obtains configuration information of the device to be verified after the initial state is restored, and returns the configuration information to the verification unit.

10. The mainboard according to claim 1, wherein the channel management unit is configured to, after the device to be verified is determined, gate a channel connected to the device to be verified, and obtain the configuration information of the device to be verified through the channel.

11. A security verification method, used by a verification unit to perform security verification, wherein a mainboard is deployed in an electronic device, a device to be verified is disposed inside and/or a device to be verified is externally connected to the electronic device, the mainboard comprises the verification unit and a channel management unit, the verification unit is connected to the channel management unit, and the channel management unit is connected to each device to be verified, wherein the verification unit is configured to store, for each device to be verified, a respective device identifier; and the method comprises:
after the electronic device is powered on, sending (S100) a verification instruction for the device to be verified to the channel management unit, wherein the verification instruction carries a device identifier of the device to be verified;
receiving (S102) configuration information, of the device to be verified, returned by the channel management unit, wherein the received configuration information includes a device identifier corresponding to the configuration information;
verifying (S104) the configuration information according to stored verification information of each device to be verified, wherein verifying the configuration information comprises determining, according to the device identifier corresponding to the configuration information, verification information corresponding to the device identifier from the verification information of each device to be verified; and
after it is determined that the device to be verified is verified, controlling (S106) the electronic device to start.

12. A security verification method, used by a channel management unit to perform security verification, wherein a mainboard is deployed in an electronic device, a device to be verified is disposed inside and/or a device to be verified is externally connected to the electronic device, the mainboard comprises a verification unit and the channel management unit, the verification unit is connected to the channel management unit, and the channel management unit is connected to each device to be verified, wherein the verification unit is configured to store, for each device to be verified, a respective device identifier; and the method comprises:
after the electronic device is powered on, receiving (S200) a verification instruction sent by the verification unit;
determining (S202), according to the device identifier carried in the received verification instruction, the device to be verified; and
obtaining (S204) configuration information of the device to be verified, and
returning, according to the device identifier of the device to be verified, the obtained configuration information to the verification unit.

13. A security verification apparatus, used by a verification unit to perform security verification, wherein a mainboard is deployed in an electronic device, a device to be verified is disposed inside and/or a device to be verified is externally connected to the electronic device, the mainboard comprises the verification unit and a channel management unit, the verification unit is connected to the channel management unit, and the channel management unit is connected to each device to be verified, wherein the verification unit is configured to store, for each device to be verified, a respective device identifier; and the apparatus comprises:
a sending module (300), configured to, after the electronic device is powered on, send (S100) a verification instruction for the device to be verified to the channel management unit, wherein the verification instruction carries a device identifier of the device to be verified;
a receiving module (302), configured to receive (S102) configuration information, of the device to be verified, returned by the channel management unit, wherein the received configuration information includes a device identifier corresponding to the configuration information;
a verification module (304), configured to verify (S104) the configuration information according to stored verification information of each device to be verified, wherein verifying the configuration information comprises determining, according to the device identifier corresponding to the configuration information, verification information corresponding to the device identifier from the verification information of each device to be verified; and
a starting module (306), configured to, after it is determined that the device to be verified is verified, control (S106) the electronic device to start.

14. A security verification apparatus, used by a channel management unit to perform security verification, wherein a mainboard is deployed in an electronic device, a device to be verified is disposed inside and/or a device to be verified is externally connected to the electronic device, the mainboard comprises a verification unit and the channel management unit, the verification unit is connected to the channel management unit, and the channel management unit is connected to each device to be verified, wherein the verification unit is configured to store, for each device to be verified, a respective device identifier; and the apparatus comprises:
a receiving module (400), configured to, after the electronic device is powered on, receive (S200) a verification instruction sent by the verification unit;
a determining module (402), configured to determine (S202), according to the device identifier carried in the received verification instruction, the device to be verified; and
a forwarding module (404), configured to obtain (S204) configuration information of the device to be verified, and return, according to the device identifier of the device to be verified, the obtained configuration information to the verification unit.

15. A computer-readable storage medium, wherein the storage medium stores a computer program, and the computer program is executed by a processor to implement the method according to claim 11 or 12.

## Patentansprüche

1. Mainboard, wobei das Mainboard in einer elektronischen Vorrichtung eingesetzt wird, eine zu verifizierende Vorrichtung innerhalb der elektronischen Vorrichtung angeordnet ist und/oder eine zu verifizierende Vorrichtung extern mit der elektronischen Vorrichtung verbunden ist, das Mainboard eine Verifizierungseinheit und eine Kanalverwaltungseinheit umfasst, die Verifizierungseinheit mit der Kanalverwaltungseinheit verbunden ist, und die Kanalverwaltungseinheit mit jeder zu verifizierenden Vorrichtung verbunden ist, wobei die Verifizierungseinheit dazu ausgelegt ist, für jede zu verifizierende Vorrichtung eine jeweilige Vorrichtungskennung zu speichern; wobei
die Verifizierungseinheit ausgelegt ist zum, nach dem Einschalten der elektronischen Vorrichtung:
Senden (S100) einer Verifizierungsanweisung für die zu verifizierende Vorrichtung an die Kanalverwaltungseinheit, wobei die Verifizierungsanweisung eine Vorrichtungskennung der zu verifizierenden Vorrichtung führt,
Empfangen (S102) von Konfigurationsinformationen der zu verifizierenden Vorrichtung, die durch die Kanalverwaltungseinheit zurückgegeben werden, wobei die empfangenen Konfigurationsinformationen eine Vorrichtungskennung beinhalten, die den Konfigurationsinformationen entspricht,
Verifizieren (S104) der Konfigurationsinformationen gemäß Verifizierungsinformationen jeder zu verifizierenden Vorrichtung, die durch die Verifizierungseinheit gespeichert werden, wobei das Verifizieren der Konfigurationsinformationen das Bestimmen, gemäß der Vorrichtungskennung, die den Konfigurationsinformationen entspricht, von Verifizierungsinformationen, die der Vorrichtungskennung entsprechen, aus den Verifizierungsinformationen jeder zu verifizierenden Vorrichtung umfasst, und
Steuern (S106) der elektronischen Vorrichtung, zu starten, nachdem bestimmt wurde, dass das zu verifizierende Gerät verifiziert ist; und
die Kanalverwaltungseinheit ausgelegt ist zum:
Empfangen (S200), von der Verifizierungseinheit, der Verifizierungsanweisung,
Bestimmen (S202), gemäß der Vorrichtungskennung, die in der empfangenen Verifizierungsanweisung geführt wird, der zu verifizierenden Vorrichtung,
Erhalten (S204) der Konfigurationsinformationen der zu verifizierenden Vorrichtung, und
Zurückgeben, gemäß der Vorrichtungskennung der zu verifizierenden Vorrichtung, der erhaltenen Konfigurationsinformationen an die Verifizierungseinheit.

2. Mainboard nach Anspruch 1, wobei die zu verifizierende Vorrichtung innerhalb der elektronischen Vorrichtung angeordnet ist und zumindest einen Zielspeicher zum Speichern von Host-Konfigurationsinformationen der elektronischen Vorrichtung enthält; und
die Verifizierungseinheit ausgelegt ist zum, nach dem Einschalten der elektronischen Vorrichtung, Senden, an die Kanalverwaltungseinheit, einer ersten Verifizierungsanweisung, die eine Vorrichtungskennung des Zielspeichers führt; und Empfangen und Verifizieren von Host-Konfigurationsinformationen, die durch die Kanalverwaltungseinheit zurückgegeben werden, und Senden einer zweiten Verifizierungsanweisung an die Kanalverwaltungseinheit gemäß einer Vorrichtungskennung der anderen zu verifizierenden Vorrichtung, die sich von dem Zielspeicher unterscheidet, nachdem bestimmt wurde, dass die Host-Konfigurationsinformationen verifiziert sind, bis die Verifizierung an jeder zu verifizierenden Vorrichtung abgeschlossen ist; und
die Kanalverwaltungseinheit ausgelegt ist zum Bestimmen des Zielspeichers gemäß der Vorrichtungskennung, die in der ersten Verifizierungsanweisung geführt wird, Erhalten der Host-Konfigurationsinformationen aus dem Zielspeicher und Zurückgeben der Host-Konfigurationsinformationen an die Verifizierungseinheit; und Bestimmen, gemäß einer Vorrichtungskennung, die in der zweiten Verifizierungsanweisung geführt wird, einer zu verifizierenden Vorrichtung, die der Vorrichtungskennung entspricht, Erhalten von Peripheriekonfigurationsinformationen von der zu verifizierenden Vorrichtung und Zurückgeben der Peripheriekonfigurationsinformationen an die Verifizierungseinheit gemäß der zweiten Verifizierungsanweisung.

3. Mainboard nach Anspruch 2, wobei die zu verifizierende Vorrichtung zumindest eine Schnittstelleneinheit und einen Peripheriespeicher enthält; und die Schnittstelleneinheit und die Kanalverwaltungseinheit über eine vorbestimmte physische Schnittstelle verbunden sind; und
die Kanalverwaltungseinheit ausgelegt ist zum Erhalten von Peripheriekonfigurationsinformationen der zu verifizierenden Vorrichtung aus dem Peripheriespeicher unter Verwendung der Schnittstelleneinheit.

4. Mainboard nach Anspruch 3, wobei die Verifizierungseinheit ausgelegt ist zum Senden einer dritten Verifizierungsanweisung für die Schnittstelleneinheit der zu verifizierenden Vorrichtung an die Kanalverwaltungseinheit; und Empfangen und Verifizieren von Schnittstellenkonfigurationsinformationen, die durch die Kanalverwaltungseinheit zurückgegeben werden, und Senden einer zweiten Verifizierungsanweisung für den Peripheriespeicher der zu verifizierenden Vorrichtung an die Kanalverwaltungseinheit, nachdem gemäß den Schnittstellenkonfigurationsinformationen bestimmt wurde, dass die Verifizierung erfolgreich ist; und
die Kanalverwaltungseinheit ausgelegt ist zum Bestimmen der Schnittstelleneinheit gemäß der dritten Verifizierungsanweisung, Erhalten der Schnittstellenkonfigurationsinformationen der Schnittstelleneinheit und Zurückgeben der Schnittstellenkonfigurationsinformationen an die Verifizierungseinheit; und Erhalten der Peripheriekonfigurationsinformationen von dem Peripheriespeicher gemäß der zweiten Verifizierungsanweisung unter Verwendung der Schnittstelleneinheit und Zurückgeben der Peripheriekonfigurationsinformationen an die Verifizierungseinheit.

5. Mainboard nach Anspruch 1, wobei die Kanalverwaltungseinheit ein Chip ist, der einen Datenübertragungsstandard jedes Pins vordefiniert; und
die Kanalverwaltungseinheit ausgelegt ist zum, für zumindest einen Teil von Pins, Bestimmen einer Leerlaufzeitperiode des Pins gemäß einem Datenübertragungsstandard des Pins und Übertragen der Konfigurationsinformationen in der Leerlaufzeitperiode, wobei die Leerlaufzeitperiode eine Zeitperiode ist, die nicht für eine Datenübertragung durch den Pin vordefiniert ist.

6. Mainboard nach Anspruch 2, wobei Prioritäten anderer zu verifizierender Vorrichtungen als der Zielspeicher nicht vollständig gleich sind; und
die Verifizierungseinheit ausgelegt ist zum, nach Verifizierung der Host-Konfigurationsinformationen, gemäß vorbestimmten Prioritäten der anderen zu verifizierenden Vorrichtungen als der Zielspeicher, sequenziellen Senden einer zweiten Verifizierungsanweisung an die Kanalverwaltungseinheit für jede zu verifizierende Vorrichtung gemäß einer Vorrichtungskennung der zu verifizierenden Vorrichtung, bis die Verifizierung an jeder zu verifizierenden Vorrichtung abgeschlossen ist.

7. Mainboard nach Anspruch 1, wobei die Verifizierungseinheit ausgelegt ist zum, wenn bestimmt wird, gemäß den empfangenen Konfigurationsinformationen, dass diese Verifizierung fehlschlägt, Bestimmen, dass die elektronische Vorrichtung unzuverlässig ist, und Steuern der elektronischen Vorrichtung, sich auszuschalten und abzuschalten.

8. Mainboard nach Anspruch 1, wobei eine Steuereinheit ferner in der elektronischen Vorrichtung eingesetzt wird und die Steuereinheit mit der Kanalverwaltungseinheit verbunden ist;
die Verifizierungseinheit ausgelegt ist zum, nach dem Einschalten der elektronischen Vorrichtung, Senden, an die Kanalverwaltungseinheit, einer Aussetzungsanweisung, die zum Pausieren des Startens der elektronischen Vorrichtung verwendet wird; und Senden, an die Kanalverwaltungseinheit, einer Startanweisung, die zum Fortfahren des Startens der elektronischen Vorrichtung verwendet wird, nachdem bestimmt wurde, dass die zu verifizierende Vorrichtung verifiziert ist; und
die Kanalverwaltungseinheit ausgelegt ist zum Verbinden mit der Steuereinheit in der elektronischen Vorrichtung gemäß der empfangenen Aussetzanweisung und Senden der Aussetzanweisung an die Steuereinheit, um das Starten eines in der Steuereinheit zuvor eingesetzten Betriebssystems zu pausieren; und Senden der empfangenen Startanweisung an die Steuereinheit, um das Betriebssystem in der Steuereinheit zu starten.

9. Mainboard nach Anspruch 1, wobei die Verifizierungseinheit ausgelegt ist zum Senden einer Rücksetzanweisung, die eine Vorrichtungskennung führt, an die Kanalverwaltungseinheit; und
die Kanalverwaltungseinheit ausgelegt ist zum Weiterleiten der Rücksetzanweisung an eine zu verifizierende Vorrichtung entsprechend der Vorrichtungskennung gemäß der Vorrichtungskennung, sodass die zu verifizierende Vorrichtung einen Anfangszustand gemäß der Rücksetzanweisung wiederherstellt, Konfigurationsinformationen der zu verifizierenden Vorrichtung erhält, nachdem der Anfangszustand wiederhergestellt ist, und die Konfigurationsinformationen an die Verifizierungseinheit zurückgibt.

10. Mainboard nach Anspruch 1, wobei die Kanalverwaltungseinheit ausgelegt ist zum, nach dem Bestimmen der zu verifizierenden Vorrichtung, Steuern mittels Gate eines mit der zu verifizierenden Vorrichtung verbundenen Kanals und Erhalten der Konfigurationsinformationen der zu verifizierenden Vorrichtung durch den Kanal.

11. Sicherheitsverifizierungsverfahren, das durch eine Verifizierungseinheit zum Durchführen einer Sicherheitsverifizierung verwendet wird, wobei ein Mainboard in einer elektronischen Vorrichtung eingesetzt wird, eine zu verifizierende Vorrichtung innerhalb der elektronischen Vorrichtung angeordnet ist und/oder eine zu verifizierende Vorrichtung extern mit der elektronischen Vorrichtung verbunden ist, das Mainboard die Verifizierungseinheit und eine Kanalverwaltungseinheit umfasst, die Verifizierungseinheit mit der Kanalverwaltungseinheit verbunden ist, und die Kanalverwaltungseinheit mit jeder zu verifizierenden Vorrichtung verbunden ist, wobei die Verifizierungseinheit dazu ausgelegt ist, für jede zu verifizierende Vorrichtung eine jeweilige Vorrichtungskennung zu speichern; und das Verfahren umfasst:
nachdem die elektronische Vorrichtung eingeschaltet ist, Senden (S100) einer Verifizierungsanweisung für die zu verifizierende Vorrichtung an die Kanalverwaltungseinheit, wobei die Verifizierungsanweisung eine Vorrichtungskennung der zu verifizierenden Vorrichtung führt;
Empfangen (S102) von Konfigurationsinformationen der zu verifizierenden Vorrichtung, die durch die Kanalverwaltungseinheit zurückgegeben werden, wobei die empfangenen Konfigurationsinformationen eine Vorrichtungskennung beinhalten, die den Konfigurationsinformationen entspricht;
Verifizieren (S104) der Konfigurationsinformationen gemäß gespeicherten Verifizierungsinformationen jeder zu verifizierenden Vorrichtung, wobei das Verifizieren der Konfigurationsinformationen das Bestimmen, gemäß der Vorrichtungskennung, die den Konfigurationsinformationen entspricht, von Verifizierungsinformationen, die der Vorrichtungskennung entsprechen, aus den Verifizierungsinformationen jeder zu verifizierenden Vorrichtung umfasst; und
nachdem bestimmt wurde, dass die zu verifizierende Vorrichtung verifiziert ist, Steuern (S106) der zu startenden elektronischen Vorrichtung.

12. Sicherheitsverifizierungsverfahren, das durch eine Kanalverwaltungseinheit zum Durchführen einer Sicherheitsverifizierung verwendet wird, wobei ein Mainboard in einer elektronischen Vorrichtung eingesetzt wird, eine zu verifizierende Vorrichtung innerhalb der elektronischen Vorrichtung angeordnet ist und/oder eine zu verifizierende Vorrichtung extern mit der elektronischen Vorrichtung verbunden ist, das Mainboard eine Verifizierungseinheit und die Kanalverwaltungseinheit umfasst, die Verifizierungseinheit mit der Kanalverwaltungseinheit verbunden ist, und die Kanalverwaltungseinheit mit jeder zu verifizierenden Vorrichtung verbunden ist, wobei die Verifizierungseinheit dazu ausgelegt ist, für jede zu verifizierende Vorrichtung eine jeweilige Vorrichtungskennung zu speichern; und das Verfahren umfasst:
nachdem die elektronische Vorrichtung eingeschaltet ist, Empfangen (S200) einer Verifizierungsanweisung, die durch die Verifizierungseinheit gesendet wird;
Bestimmen (S202), gemäß der Vorrichtungskennung, die in der empfangenen Verifizierungsanweisung geführt wird, der zu verifizierenden Vorrichtung; und
Erhalten (S204) von Konfigurationsinformationen der zu verifizierenden Vorrichtung, und
Zurückgeben, gemäß der Vorrichtungskennung der zu verifizierenden Vorrichtung, der erhaltenen Konfigurationsinformationen an die Verifizierungseinheit.

13. Sicherheitsverifizierungseinrichtung, die durch eine Verifizierungseinheit zum Durchführen einer Sicherheitsverifizierung verwendet wird, wobei ein Mainboard in einer elektronischen Vorrichtung eingesetzt wird, eine zu verifizierende Vorrichtung innerhalb der elektronischen Vorrichtung angeordnet ist und/oder eine zu verifizierende Vorrichtung extern mit der elektronischen Vorrichtung verbunden ist, das Mainboard die Verifizierungseinheit und eine Kanalverwaltungseinheit umfasst, die Verifizierungseinheit mit der Kanalverwaltungseinheit verbunden ist, und die Kanalverwaltungseinheit mit jeder zu verifizierenden Vorrichtung verbunden ist, wobei die Verifizierungseinheit dazu ausgelegt ist, für jede zu verifizierende Vorrichtung eine jeweilige Vorrichtungskennung zu speichern; und die Einrichtung umfasst:
ein Sendemodul (300), das ausgelegt ist zum, nachdem die elektronische Vorrichtung eingeschaltet ist, Senden (S100) einer Verifizierungsanweisung für die zu verifizierende Vorrichtung an die Kanalverwaltungseinheit, wobei die Verifizierungsanweisung eine Vorrichtungskennung der zu verifizierenden Vorrichtung führt;
ein Empfangsmodul (302), das ausgelegt ist zum Empfangen (S102) von Konfigurationsinformationen der zu verifizierenden Vorrichtung, die durch die Kanalverwaltungseinheit zurückgegeben werden, wobei die empfangenen Konfigurationsinformationen eine Vorrichtungskennung beinhalten, die den Konfigurationsinformationen entspricht;
ein Verifizierungsmodul (304), das ausgelegt ist zum Verifizieren (S104) der Konfigurationsinformationen gemäß gespeicherten Verifizierungsinformationen jeder zu verifizierenden Vorrichtung, wobei das Verifizieren der Konfigurationsinformationen das Bestimmen, gemäß der Vorrichtungskennung, die den Konfigurationsinformationen entspricht, von Verifizierungsinformationen, die der Vorrichtungskennung entsprechen, aus den Verifizierungsinformationen jeder zu verifizierenden Vorrichtung umfasst; und
ein Startmodul (306), das ausgelegt ist zum, nachdem bestimmt wurde, dass die zu verifizierende Vorrichtung verifiziert ist, Steuern (S106) der zu startenden elektronischen Vorrichtung.

14. Sicherheitsverifizierungseinrichtung, die durch eine Kanalverwaltungseinheit zum Durchführen einer Sicherheitsverifizierung verwendet wird, wobei ein Mainboard in einer elektronischen Vorrichtung eingesetzt wird, eine zu verifizierende Vorrichtung innerhalb der elektronischen Vorrichtung angeordnet ist und/oder eine zu verifizierende Vorrichtung extern mit der elektronischen Vorrichtung verbunden ist, das Mainboard eine Verifizierungseinheit und die Kanalverwaltungseinheit umfasst, die Verifizierungseinheit mit der Kanalverwaltungseinheit verbunden ist, und die Kanalverwaltungseinheit mit jeder zu verifizierenden Vorrichtung verbunden ist, wobei die Verifizierungseinheit dazu ausgelegt ist, für jede zu verifizierende Vorrichtung eine jeweilige Vorrichtungskennung zu speichern; und die Einrichtung umfasst:
ein Empfangsmodul (400), das ausgelegt ist zum, nachdem die elektronische Vorrichtung eingeschaltet ist, Empfangen (S200) einer Verifizierungsanweisung, die durch die Verifizierungseinheit gesendet wird;
ein Bestimmungsmodul (402), das ausgelegt ist zum Bestimmen (S202), gemäß der Vorrichtungskennung, die in der empfangenen Verifizierungsanweisung geführt wird, der zu verifizierenden Vorrichtung; und
ein Weiterleitungsmodul (404), das ausgelegt ist zum Erhalten (S204) von Konfigurationsinformationen der zu verifizierenden Vorrichtung und Zurückgeben, gemäß der Vorrichtungskennung der zu verifizierenden Vorrichtung, der erhaltenen Konfigurationsinformationen an die Verifizierungseinheit.

15. Computerlesbares Speichermedium, wobei das Speichermedium ein Computerprogramm speichert und das Computerprogramm durch einen Prozessor ausgeführt wird, um das Verfahren nach Anspruch 11 oder 12 zu implementieren.

## Revendications

1. Carte mère, dans laquelle la carte mère est déployée dans un dispositif électronique, un dispositif à vérifier est disposé à l'intérieur et/ou un dispositif à vérifier est connecté en externe au dispositif électronique, la carte mère comprenant une unité de vérification et une unité de gestion de canal, l'unité de vérification étant connectée à l'unité de gestion de canal, et l'unité de gestion de canal étant connectée à chaque dispositif à vérifier, l'unité de vérification étant configurée pour stocker, pour chaque dispositif à vérifier, un identifiant de dispositif respectif ;
l'unité de vérification étant configurée pour, après la mise sous tension du dispositif électronique,
envoyer (S100) à l'unité de gestion de canal une instruction de vérification du dispositif à vérifier, l'instruction de vérification transportant un identifiant de dispositif du dispositif à vérifier,
recevoir (S102) des informations de configuration du dispositif à vérifier, renvoyées par l'unité de gestion de canal, les informations de configuration reçues incluant un identifiant de dispositif correspondant aux informations de configuration,
vérifier (S104) les informations de configuration en fonction des informations de vérification de chaque dispositif à vérifier, stockées par l'unité de vérification, la vérification des informations de configuration comprenant la détermination, en fonction de l'identifiant de dispositif correspondant aux informations de configuration, d'informations de vérification correspondant à l'identifiant de dispositif à partir des informations de vérification de chaque dispositif à vérifier, et
commander (S106) au dispositif électronique de démarrer après qu'il a été déterminé que le dispositif à vérifier est vérifié ; et
l'unité de gestion de canal étant configurée pour
recevoir (S200), de l'unité de vérification, l'instruction de vérification,
déterminer (S202), en fonction de l'identifiant de dispositif transporté dans l'instruction de vérification reçue, le dispositif à vérifier,
obtenir (S204) les informations de configuration du périphérique à vérifier, et
renvoyer, en fonction de l'identifiant de dispositif du dispositif à vérifier, les informations de configuration obtenues à l'unité de vérification.

2. Carte mère selon la revendication 1, dans laquelle le dispositif à vérifier est disposé à l'intérieur du dispositif électronique et contient au moins une mémoire cible pour stocker des informations de configuration d'hôte du dispositif électronique ; et
l'unité de vérification est configurée pour, après la mise sous tension du dispositif électronique, envoyer à l'unité de gestion de canal, une première instruction de vérification transportant un identifiant de dispositif de la mémoire cible ; et recevoir et vérifier les informations de configuration d'hôte renvoyées par l'unité de gestion de canal, et envoyer une seconde instruction de vérification à l'unité de gestion de canal en fonction d'un identifiant de dispositif de l'autre dispositif à vérifier différent de la mémoire cible après qu'il a été déterminé que les informations de configuration d'hôte sont vérifiées, jusqu'à ce que la vérification de chaque dispositif à vérifier soit terminée ; et
l'unité de gestion de canal est configurée pour déterminer la mémoire cible en fonction de l'identifiant de dispositif transporté dans la première instruction de vérification, obtenir les informations de configuration d'hôte à partir de la mémoire cible, et renvoyer les informations de configuration d'hôte à l'unité de vérification ; et déterminer, en fonction d'un identifiant de dispositif transporté dans la seconde instruction de vérification, un dispositif à vérifier correspondant à l'identifiant de dispositif, obtenir des informations de configuration périphérique du dispositif à vérifier, et renvoyer les informations de configuration périphérique à l'unité de vérification conformément à la seconde instruction de vérification.

3. Carte mère selon la revendication 2, dans laquelle le dispositif à vérifier contient au moins une unité d'interface et une mémoire périphérique ; et l'unité d'interface et l'unité de gestion de canal sont connectées par l'intermédiaire d'une interface physique prédéterminée ; et
l'unité de gestion de canal est configurée pour obtenir des informations de configuration périphérique du dispositif à vérifier à partir de la mémoire périphérique au moyen de l'unité d'interface.

4. Carte mère selon la revendication 3, dans laquelle l'unité de vérification est configurée pour envoyer à l'unité de gestion de canal une troisième instruction de vérification pour l'unité d'interface du dispositif à vérifier ; et recevoir et vérifier des informations de configuration d'interface renvoyées par l'unité de gestion de canal, et envoyer à l'unité de gestion de canal une seconde instruction de vérification pour la mémoire périphérique du dispositif à vérifier, après qu'il a été déterminé, en fonction des informations de configuration d'interface, que la vérification a réussi ; et
l'unité de gestion de canal est configurée pour déterminer l'unité d'interface conformément à la troisième instruction de vérification, obtenir les informations de configuration d'interface de l'unité d'interface, et renvoyer les informations de configuration d'interface à l'unité de vérification ; et obtenir les informations de configuration périphérique à partir de la mémoire périphérique conformément à la deuxième instruction de vérification au moyen de l'unité d'interface, et renvoyer les informations de configuration périphérique à l'unité de vérification.

5. Carte mère selon la revendication 1, dans laquelle l'unité de gestion de canal est une puce prédéfinissant une norme de transmission de données de chaque broche ; et
l'unité de gestion de canal est configurée pour, pour au moins une partie des broches, déterminer une période de temps d'inactivité de la broche conformément à une norme de transmission de données de la broche, et transmettre les informations de configuration dans la période de temps d'inactivité, la période de temps d'inactivité étant une période de temps non prédéfinie pour la transmission de données par la broche.

6. Carte mère selon la revendication 2, dans laquelle les priorités de dispositifs à vérifier autres que la mémoire cible ne sont pas complètement les mêmes ; et
l'unité de vérification est configurée pour, après vérification des informations de configuration d'hôte, en fonction de priorités prédéterminées des dispositifs à vérifier autres que la mémoire cible, envoyer une seconde instruction de vérification à l'unité de gestion de canaux séquentiellement pour chaque dispositif à vérifier en fonction d'un identifiant de dispositif du dispositif à vérifier, jusqu'à ce que la vérification de chaque dispositif à vérifier soit terminée.

7. Carte mère selon la revendication 1, dans laquelle l'unité de vérification est configurée pour, lorsqu'il est déterminé, en fonction des informations de configuration reçues, que la vérification a échoué, déterminer que le dispositif électronique n'est pas fiable, et commander au dispositif électronique de s'éteindre et de s'arrêter.

8. Carte mère selon la revendication 1, dans laquelle une unité de commande est en outre déployée dans le dispositif électronique, et l'unité de commande est connectée à l'unité de gestion de canal ;
l'unité de vérification est configurée pour, après la mise sous tension du dispositif électronique, envoyer à l'unité de gestion de canal une instruction de suspension servant à suspendre le démarrage du dispositif électronique ; et envoyer à l'unité de gestion de canal une instruction de démarrage servant à continuer le démarrage du dispositif électronique après qu'il a été déterminé que le dispositif à vérifier est vérifié ; et
l'unité de gestion de canal est configurée pour se connecter à l'unité de commande dans le dispositif électronique conformément à l'instruction de suspension reçue, et envoyer l'instruction de suspension à l'unité de commande, de manière à suspendre le démarrage d'un système d'exploitation prédéployé dans l'unité de commande ; et envoyer l'instruction de démarrage reçue à l'unité de commande, de manière à démarrer le système d'exploitation dans l'unité de commande.

9. Carte mère selon la revendication 1, dans laquelle l'unité de vérification est configurée pour envoyer à l'unité de gestion de canal une instruction de réinitialisation transportant un identifiant de dispositif ; et
l'unité de gestion de canal est configurée pour transmettre l'instruction de réinitialisation à un dispositif à vérifier correspondant à l'identifiant de dispositif en fonction de l'identifiant de dispositif, de façon que le dispositif à vérifier restaure un état initial conformément à l'instruction de réinitialisation, obtienne des informations de configuration du dispositif à vérifier après que l'état initial a été restauré, et renvoie les informations de configuration à l'unité de vérification.

10. Carte mère selon la revendication 1, dans laquelle l'unité de gestion de canal est configurée pour, après que le dispositif à vérifier a été déterminé, ouvrir un canal connecté au dispositif à vérifier, et obtenir les informations de configuration du dispositif à vérifier par l'intermédiaire du canal.

11. Procédé de vérification de sécurité, utilisé par une unité de vérification pour effectuer une vérification de sécurité, dans lequel une carte mère est déployée dans un dispositif électronique, un dispositif à vérifier est disposé à l'intérieur et/ou un dispositif à vérifier est connecté en externe au dispositif électronique, la carte mère comprenant l'unité de vérification et une unité de gestion de canal, l'unité de vérification étant connectée à l'unité de gestion de canal, et l'unité de gestion de canal étant connectée à chaque dispositif à vérifier, l'unité de vérification étant configurée pour stocker, pour chaque dispositif à vérifier, un identifiant de dispositif respectif ; et le procédé comprend :
après la mise sous tension du dispositif électronique, l'envoi (S100) d'une instruction de vérification pour le dispositif à vérifier à l'unité de gestion de canal, l'instruction de vérification transportant un identifiant de dispositif du dispositif à vérifier ;
la réception (S102) d'informations de configuration du dispositif à vérifier, renvoyées par l'unité de gestion de canal, les informations de configuration reçues incluant un identifiant de dispositif correspondant aux informations de configuration ;
la vérification (S104) des informations de configuration en fonction des informations de vérification stockées de chaque dispositif à vérifier, la vérification des informations de configuration comprenant la détermination, en fonction de l'identifiant de dispositif correspondant aux informations de configuration, d'informations de vérification correspondant à l'identifiant de dispositif à partir des informations de vérification de chaque dispositif à vérifier ; et
après qu'il a été déterminé que le dispositif à vérifier est vérifié, la commande (S106) dispositif électronique pour qu'il démarre.

12. Procédé de vérification de sécurité, utilisé par une unité de gestion de canal pour effectuer une vérification de sécurité, dans lequel une carte mère est déployée dans un dispositif électronique, un dispositif à vérifier est disposé à l'intérieur et/ou un dispositif à vérifier est connecté en externe au dispositif électronique, la carte mère comprenant l'unité de vérification et une unité de gestion de canal, l'unité de vérification étant connectée à l'unité de gestion de canal, et l'unité de gestion de canal étant connectée à chaque dispositif à vérifier, l'unité de vérification étant configurée pour stocker, pour chaque dispositif à vérifier, un identifiant de dispositif respectif ; et le procédé comprend :
après la mise sous tension du dispositif électronique, la réception (S200) d'une instruction de vérification envoyée par l'unité de vérification ;
la détermination (S202), en fonction de l'identifiant d'appareil transporté dans l'instruction de vérification reçue, du dispositif à vérifier ; et
l'obtention (S204) d'informations de configuration du dispositif à vérifier, et
le renvoi des informations de configuration obtenues à l'unité de vérification, en fonction de l'identifiant de dispositif du dispositif à vérifier.

13. Appareil de vérification de sécurité, utilisé par une unité de vérification pour effectuer une vérification de sécurité, dans lequel une carte mère est déployée dans un dispositif électronique, un dispositif à vérifier est disposé à l'intérieur et/ou un dispositif à vérifier est connecté en externe au dispositif électronique, la carte mère comprenant l'unité de vérification et une unité de gestion de canal, l'unité de vérification étant connectée à l'unité de gestion de canal, et l'unité de gestion de canal étant connectée à chaque dispositif à vérifier, l'unité de vérification étant configurée pour stocker, pour chaque dispositif à vérifier, un identifiant de dispositif respectif ; et l'appareil comprend :
un module d'envoi (300), configuré pour, après la mise sous tension du dispositif électronique, envoyer (S100) à l'unité de gestion de canal une instruction de vérification du dispositif à vérifier, l'instruction de vérification transportant un identifiant de dispositif du dispositif à vérifier ;
un module de réception (302), configuré pour recevoir (S102) des informations de configuration du dispositif à vérifier, renvoyées par l'unité de gestion de canal, les informations de configuration reçues comportant un identifiant de dispositif correspondant aux informations de configuration ;
un module de vérification (304), configuré pour vérifier (S104) les informations de configuration en fonction des informations de vérification stockées de chaque dispositif à vérifier, la vérification des informations de configuration comprenant la détermination, en fonction de l'identifiant de dispositif correspondant aux informations de configuration, d'informations de vérification correspondant à l'identifiant de dispositif à partir des informations de vérification de chaque dispositif à vérifier ; et
un module de démarrage (306), configuré pour, après qu'il a été déterminé que le dispositif à vérifier est vérifié, commander (S106) le dispositif électronique pour qu'il démarre.

14. Appareil de vérification de sécurité, utilisé par une unité de gestion de canal pour effectuer une vérification de sécurité, dans lequel une carte mère est déployée dans un dispositif électronique, un dispositif à vérifier est disposé à l'intérieur et/ou un dispositif à vérifier est connecté en externe au dispositif électronique, la carte mère comprenant l'unité de vérification et une unité de gestion de canal, l'unité de vérification étant connectée à l'unité de gestion de canal, et l'unité de gestion de canal étant connectée à chaque dispositif à vérifier, l'unité de vérification étant configurée pour stocker, pour chaque dispositif à vérifier, un identifiant de dispositif respectif ; et l'appareil comprend :
un module de réception (400), configuré pour, après la mise sous tension du dispositif électronique, recevoir (S200) une instruction de vérification envoyée par l'unité de vérification ;
un module de détermination (402), configuré pour déterminer (S202), en fonction de l'identifiant de dispositif transporté dans l'instruction de vérification reçue, le dispositif à vérifier ; et
un module d'acheminement (404), configuré pour obtenir (S204) des informations de configuration du dispositif à vérifier, et renvoyer selon l'identifiant de dispositif du dispositif à vérifier les informations de configuration obtenues à l'unité de vérification.

15. Support de stockage lisible par ordinateur, lequel support de stockage stocke un programme d'ordinateur, et lequel programme d'ordinateur est exécuté par un processeur pour mettre en œuvre le procédé selon la revendication 11 ou 12.
